# EUROPÄISCHE PATENTSCHRIFT

(11) **EP 3 613 908 B1**
(45) Veröffentlichungstag und Bekanntmachung des Hinweises auf die Patenterteilung: **07.06.2023**
(21) Anmeldenummer: 19192121.2
(22) Anmeldetag: 16.08.2019
(51) Int. Cl.: E03C 1/02

(54) **VERFAHREN ZUR MONTAGE EINES UNTERPUTZEINBAUKÖRPERS**
METHOD FOR INSTALLING A FLUSH MOUNTING BODY
PROCÉDÉ DE MONTAGE D'UN CORPS À ENCASTRER

(30) Priorität: 20.08.2018 DE 102018120204
(43) Veröffentlichungstag der Anmeldung: 26.02.2020
(73) Patentinhaber: Grohe AG, 58653 Hemer (DE)
(72) Erfinder: Hopfauf, Harry, 59494 Soest (DE); Langer, Heiko, 59174 Kamen (DE); Luig, Frank-Thomas, 58708 Menden (DE)

(56) Entgegenhaltungen:
- EP-A1- 2 226 540
- EP-A2- 0 506 215
- EP-A2- 0 854 243
- AT-B- 361 407
- DE-A1- 3 208 709
- DE-A1- 3 929 586
- DE-A1-102004 054 612
- US-A1- 2010 147 405

## Beschreibung

Die vorliegende Erfindung betrifft ein Verfahren zur Montage eines Unterputzeinbaukörpers, wobei der Unterputzeinbaukörper zumindest ein Umstellventil aufweist. Umstellventile dienen der Umstellung eines Flüssigkeitsflusses zwischen mehreren Flüssigkeitsabgabestellen, wie zum Beispiel Kopfbrausen und Handbrausen einer Dusche, und sind häufig Bestandteil eines Unterputzeinbaukörpers. Unterputzeinbaukörper sind innerhalb eines Mauerdurchbruchs, einer Vertiefung in einer Wand oder einem sonstigen Träger befestigbar. Insbesondere bei Einbauwänden und Vorwandsystemen haben sich solche Unterputzeinbaukörper bewährt.

Unterputzeinbaukörper dienen der Befestigung einer Funktionseinheit in einer Mauer, Wand oder einem Träger. Die Funktionseinheit kann einen Mischer, wie zum Beispiel eine Thermostatkartusche, und/oder ein Ventil umfassen. Mittels des Mischers sind ein Kaltwasser und ein Warmwasser zu einem Mischwasser mit einer gewünschten Mischwassertemperatur mischbar, wobei eine Entnahmemenge des Mischwassers mittels des Mischers oder Ventils steuerbar ist, beispielsweise bekannt aus US 2010/0147405 A1 und DE 32 08 709 A1. An den Unterputzeinbaukörper ist zumindest eine Mischwasserleitung anschließbar, über die das Mischwasser der Sanitärarmatur, wie zum Beispiel einer Handbrause, Kopfbrause, Düse, Auslauf und/oder dergleichen an einer Dusche und/oder Badewanne, zuführbar ist. Der Kaltwasseranschluss ist regelmäßig mit einem Kaltwasserhausanschluss und der Warmwasseranschluss regelmäßig mit einem Warmwasserhausanschluss über entsprechende Rohrleitungen verbunden. Bei unterschiedlichen Einbautiefen der Unterputzeinbaukörper in der Wand, Mauer oder dem Träger können Betätigungsknöpfe, Druckknöpfe oder Drehgriffe zur Betätigung des Umstellventils der Unterputzeinbaukörper unterschiedlich weit aus der Wand ragen. Hierdurch ist kein einheitliches äußeres Erscheinungsbild der Betätigungsknöpfe, Druckknöpfe oder Drehgriffe nach der Montage der Unterputzeinbaukörper in der Wand gewährleistbar. Zudem können bei einem nicht exakten Einbau der Unterputzeinbaukörper Anschlagskräfte beziehungsweise Biegemomente von den Betätigungsknöpfen, Druckknöpfen oder Drehgriffen auf das Umstellventil eingeleitet werden. Hierdurch können zwischen den Betätigungsknöpfen, Druccknöpfen oder Drehgriffen und einer Abdeckung bzw. Dekorblende des Unterputzeinbaukörpers Spalte auftreten, die die Optik beeinträchtigen.

Aufgabe der Erfindung ist daher, die mit Bezug auf den Stand der Technik geschilderten Probleme zumindest teilweise zu lösen und ein Verfahren zur Montage eines Unterputzeinbaukörpers für eine Sanitärarmatur anzugeben, mit dem ein einheitliches äußeres Erscheinungsbild gewährleistbar ist.

Diese Aufgaben werden gelöst mit einem Verfahren gemäß den Merkmalen des unabhängigen Patentanspruchs. Weitere vorteilhafte Ausgestaltungen der Erfindung sind in den abhängigen Patentansprüchen angegeben. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Umstellventil für eine Sanitärarmatur bei, das zumindest die folgenden Komponenten aufweist:
- ein Umstellventilgehäuse;
- einen Ventilkörper zur gezielten Zuleitung einer Flüssigkeit zu wenigstens zwei Umstellventilabläufen; und
- eine Spindel zur Betätigung des Ventilkörpers, wobei die Spindel vorgespannt ist, sodass die Spindel nach einem Ablängen der Spindel um einen definierten Stellweg aus dem Umstellventilgehäuse verstellt wird.

Das Umstellventil wird insbesondere für Sanitärarmaturen verwendet, die im Zusammenhang mit Duschen und/oder Badewannen zur Anwendung kommen. Bei den Sanitärarmaturen kann es sich insbesondere um Wassereinläufe, Handbrausen, Kopfbrausen, Düsen und/oder dergleichen handeln. Solche Umstellventile dienen insbesondere der Umstellung eines Flüssigkeitsflusses zwischen einer Mehrzahl oder Vielzahl von Flüssigkeitsabgabestellen bzw. Sanitärarmaturen. Bei dem Umstellventil kann es sich beispielsweise um ein Zwei-Wege-Umstellventil handeln, mit dem eine Flüssigkeit wahlweise einer ersten Flüssigkeitsabgabestelle oder zweiten Flüssigkeitsabgabestelle zuführbar ist. Hierzu weist das Umstellventil ein Umstellventilgehäuse auf, das beispielsweise nach Art eines Kopfteils ausgebildet sein kann. Das Umstellventilgehäuse kann auch derart ausgebildet sein, dass es an einem Unterputzeinbaukörper befestigbar oder in einen Unterputzeinbaukörper einschraubbar ist. Dem Umstellventil ist eine Flüssigkeit über einen Umstellventilzulauf zuführbar, der in dem Umstellventilgehäuse ausgebildet sein kann. Das Umstellventil weist ferner einen Ventilkörper zur gezielten Zuleitung der Flüssigkeit zu wenigstens zwei Umlenkventilabläufen auf. Der Ventilkörper ist in einer Umstellventilzulaufkammer des Umstellventils zwischen einem ersten Ventilsitz eines ersten Umlenkventilablaufs und einem zweiten Ventilsitz eines zweiten Umlenkventilablaufs, insbesondere durch eine translatorische Bewegung, verstellbar. Ist der Ventilkörper gegen den ersten Ventilsitz bewegt, ist der erste Umlenkventilablauf geschlossen, sodass keine Flüssigkeit durch den ersten Umlaufventilablauf abfließen kann. Der zweite Umlaufventilablauf ist in dieser Position des Ventilkörpers geöffnet, sodass die Flüssigkeit über den zweiten Umlaufventilablauf abflie-ßen kann. Ist der Ventilkörper gegen den zweiten Ventilsitz bewegt, ist der zweite Umlenkventilablauf geschlossen, sodass keine Flüssigkeit durch den zweiten Umlaufventilablauf abfließen kann. Der erste Umlaufventilablauf ist in dieser Position des Ventilkörpers geöffnet, sodass die Flüssigkeit über den ersten Umlaufventilablauf abfließen kann. Der erste Ventilsitz und/oder der zweite Ventilsitz können an dem Umstellventilgehäuse und/oder einer Komponente eines Unterputzeinbaukörpers ausgebildet sein.

Der Ventilkörper ist an einer Spindel befestigt und über die Spindel betätigbar. Die Spindel erstreckt sich zumindest teilweise durch das Umstellventilgehäuse und wird durch das Umstellventilgehäuse, insbesondere parallel zu ihrer Längsachse, geführt. Die Spindel ist im Betrieb des Umstellventils in dem Umstellventilgehäuse, insbesondere durch Zug und/oder Druck, zum Verstellen des Ventilkörpers zwischen dem ersten Ventilsitz und dem zweiten Ventilsitz begrenzt verlagerbar. Die Spindel ist vor der Montage des Umstellventils vorgespannt, sodass die Spindel nach einem Ablängen der Spindel um einen definierten Stellweg aus dem Umstellventilgehäuse verstellt wird. Dies bedeutet insbesondere, dass die Spindel mit einer Kraft beaufschlagt ist, die die Spindel insbesondere in eine Längsrichtung, d. h. parallel zur Längsachse der Spindel, drückt. Die Bewegung der Spindel ist vor dem Ablängen der Spindel gesperrt bzw. blockiert. Beim Ablängen der Spindel wird die Spindel auf eine gewünschte Länge, insbesondere in Abhängigkeit von einer Einbautiefe des Umstellventils, gekürzt. Das Ablängen kann mithilfe einer Ablängschablone erfolgen, die auf die Spindel aufgesteckt wird und in eine zur Wand definierte Position gebracht wird. Die Ablängschablone kann beispielsweise bis auf eine Trägerplatte des Unterputzeinbaukörpers geschoben werden, die auf der Wand aufliegt. Mittels der Ablängschablone sind die Spindel und gegebenenfalls weitere Komponenten des Umstellventils in einer Schnittebene ablängbar, die zu der Wand einen vorgegebenen Abstand hat. Das Ablängen kann beispielsweise durch einen Monteur mithilfe einer Säge erfolgen. Durch das Ablängen der Spindel wird eine Bewegung der Spindel automatisch freigegeben. Dies erfolgt durch ein Lösen, ein Durchtrennen und/oder Durchschneiden eines Blockierelements bzw. Sperrelements beim Ablängen der Spindel. Insbesondere ist das Blockierelement bzw. Sperrelement derart ausgebildet, dass dieses beim Ablängen der Spindel automatisch mit gelöst, durchtrennt und/oder durchschnitten wird. Durch die Freigabe der Spindel nach dem Ablängen wird diese durch ihre Vorspannung um einen definierten Stellweg aus dem Umstellventilgehäuse verstellt. Der Stellweg entspricht insbesondere einem Spiel des Ventilkörpers zwischen dem ersten Ventilsitz und dem zweiten Ventilsitz. Dies führt dazu, dass die Spindel vor der Montage weiterer Komponenten an der Spindel, wie zum Beispiel eines Betätigungsknopfs, unabhängig zur Einbautiefe des Umstellventils stets mit der gleichen Länge aus der Wand hervorsteht. Hierdurch ist ein einheitliches äußeres Erscheinungsbild und eine exakte Montage weiterer Komponenten an der Spindel gewährleistbar.

Die Spindel ist durch ein elastisches Element vorgespannt. Bei dem elastischen Element kann es sich beispielsweise um eine Feder, insbesondere nach Art einer Schraubenfeder oder Blattfeder handeln. Das elastische Element kontaktiert die Spindel insbesondere an einem längsseitigen Ende der Spindel oder einem umlaufenden Kragen an der Spindel. Das elastische Element kann sich an dem Umstellventilgehäuse oder einer Komponente des Unterputzeinbaukörpers abstützen. Weiterhin erzeugt das elastische Element insbesondere eine Stellkraft, die in eine Längsrichtung, d. h. parallel zu der Längsachse der Spindel, wirkt.

Der Ventilkörper kann durch das elastische Element gegen einen ersten Ventilsitz verstellbar sein. Dies kann bedeuten, dass die durch das elastische Element erzeugte Stellkraft die Spindel in Richtung des ersten Ventilsitzes drückt.

Der Ventilkörper kann entgegen einer Stellkraft des elastischen Elements gegen einen zweiten Ventilsitz verstellbar sein. Dies kann beispielsweise durch ein Drücken eines Benutzers auf die Spindel bzw. einen Betätigungsknopf der Spindel oder durch einen Flüssigkeitsdruck in der Umstellventilzulaufkammer erfolgen.

Die Spindel kann vor dem Ablängen gegen einen Anschlag vorgespannt sein. Bei dem Anschlag handelt es sich um ein Blockierelement bzw. Sperrelement gegen den die Spindel vor dem Ablängen durch das elastische Element gedrückt wird. Zudem kann der Anschlag nach Art eines Anschlagstopfens ausgebildet sein.

Der Anschlag kann an dem Umstellventilgehäuse oder einer Führungshülse der Spindel befestigt sein. Der Anschlag kann direkt oder indirekt an dem Umstellventilgehäuse oder der Führungshülse befestigt sein. Die Führungshülse kann rohrförmig ausgebildet sein und/oder die Spindel zumindest teilweise umgeben. Insbesondere kann die Führungshülse konzentrisch zur Spindel und/oder an dem Umstellventilgehäuse befestigt bzw. in das Umstellventilgehäuse eingeschraubt sein. Die Führungshülse dient insbesondere der Führung der Spindel oder eines Betätigungsknopfs der Spindel. Zudem kann die Führungshülse beim Ablängen der Spindel gleichzeitig, insbesondere in der gleichen Schnittebene, mit abgelängt werden. Das Ablängen der Spindel und der Führungshülse erfolgt somit insbesondere in einem einzigen Ablängschritt.

Der Anschlag kann durch das Ablängen der Spindel entfernbar sein. Dies bedeutet, wie bereits erwähnt, dass der Anschlag beim Ablängen der Spindel automatisch mit gelöst, durchtrennt und/oder durchschnitten wird.

Einem weiteren Aspekt folgend wird auch ein Unterputzeinbaukörper für eine Sanitärarmatur vorgeschlagen, der zumindest die folgenden Komponenten aufweist:
- ein Gehäuse; und
- ein erfindungsgemäßes Umstellventil, das zumindest teilweise in dem Gehäuse angeordnet ist.

Der Unterputzeinbaukörper wird insbesondere für Sanitärarmaturen verwendet, die im Zusammenhang mit Duschen und/oder Badewannen zur Anwendung kommen. Bei den Sanitärarmaturen kann es sich insbesondere um Wassereinläufe, Handbrausen, Kopfbrausen, Düsen und/oder dergleichen handeln. Solche Unterputzeinbaukörper werden regelmäßig innerhalb eines Mauerdurchbruchs, einer Vertiefung in einer Wand oder einem sonstigen Träger befestigt und dienen der Aufnahme einer Funktionseinheit.

Der Unterputzeinbaukörper kann einen insbesondere in einem Gehäuse des Unterputzeinbaukörpers zumindest teilweise angeordneten Mischer aufweisen, der beispielsweise nach Art eines manuellen Mischers oder einer Thermostatkartusche ausgebildet ist. Der Mischer kann Bestandteil der Funktionseinheit sein. Das Gehäuse kann zumindest teilweise aus Kunststoff und/oder Metall bestehen. Weiterhin kann das Gehäuse zumindest teilweise rohrförmig ausgebildet sein und/oder zumindest einen Aufnahmeraum, beispielsweise für die Funktionseinheit, bilden. Mittels des Mischers sind insbesondere ein Kaltwasser und ein Warmwasser zu einem Mischwasser mit einer gewünschten Mischwassertemperatur mischbar. Das Kaltwasser kann dabei eine Kaltwassertemperatur aufweisen, die insbesondere maximal 25 °C (Celsius), bevorzugt 1 °C bis 25 °C, besonders bevorzugt 5 °C bis 20 °C beträgt. Das Warmwasser kann eine Warmwassertemperatur aufweisen, die insbesondere maximal 90 °C, bevorzugt 25 °C bis 90 °C, besonders bevorzugt 55 °C bis 65 °C beträgt. Das Mischwasser kann von dem Mischer beispielsweise mit zumindest einer Mischwasserleitung in der Funktionseinheit einem Umstellventil zugeführt werden, mittels dem das Mischwasser einer gewünschten Entnahmestelle bzw. Sanitärarmatur zuführbar ist. Bezüglich weiterer Einzelheiten des Unterputzeinbaukörpers und des Umstellventils wird auf die Beschreibung des erfindungsgemäßen Umstellventils verwiesen.

Erfindungsgemäß wird ein Verfahren zur Montage eines Unterputzeinbaukörpers vorgeschlagen, das zumindest die folgenden Schritte aufweist:
a) Befestigen des Unterputzeinbaukörpers zumindest teilweise in einer Wand oder einem Träger; und
b) Ablängen einer Spindel eines Umstellventils des Unterputzeinbaukörpers.

Durch das Ablängen der Spindel wird die Spindel automatisch freigegeben, sodass die Spindel nach dem Ablängen um einen definierten Stellweg aus dem Umstellventilgehäuse verstellt wird. Das Ablängen der Spindel erfolgt in einem gewünschten Abstand zur Wand bzw. des Trägers, um eine einheitliche Optik zu gewährleisten. Für weitere Einzelheiten wird auf die Beschreibung des oben beschriebenen Umstellventils und dem oben beschriebenen Unterputzeinbaukörper verwiesen.

Zum Ablängen der Spindel kann eine Ablängschablone auf die Spindel aufgesteckt werden. Die Ablängschablone kann auf einer äußeren Umfangsfläche eine, insbesondere umlaufende, Nut aufweisen, die die Schnittebene, beispielsweise für eine Säge, vorgibt.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: eine erste Variante eines eingebauten Unterputzeinbaukörpers in einer perspektivischen Darstellung;
- Fig. 2:: die erste Variante des Unterputzeinbaukörpers nach der Anbringung einer Trägerplatte in einer Schnittdarstellung;
- Fig. 3:: die erste Variante des Unterputzeinbaukörpers nach der Anbringung einer Ablängschablone in einer Schnittdarstellung;
- Fig. 4:: eine Detailansicht der ersten Variante des Unterputzeinbaukörpers nach dem Ablängen in einer Schnittdarstellung;
- Fig. 5:: die erste Variante des Unterputzeinbaukörpers nach der Anbringung eines Betätigungsknopfs;
- Fig. 6:: die erste Variante des Unterputzeinbaukörpers nach der vollständigen Montage;
- Fig. 7:: eine zweite Variante des Unterputzeinbaukörpers in einer perspektivischen Darstellung;
- Fig. 8:: die zweite Variante des Unterputzeinbaukörpers nach der Anbringung einer Trägerplatte;
- Fig. 9:: eine Detailansicht der zweiten Variante des Unterputzeinbaukörpers;
- Fig. 10:: eine zweite Variante zur Befestigung eines Betätigungsknopfs an einer Spindel;
- Fig. 11:: eine Detailansicht der zweiten Variante zur Befestigung des Betätigungsknopfs an der Spindel;
- Fig. 12:: eine dritte Variante zur Anbringung eines Betätigungsknopfs an einer Spindel;
- Fig. 13:: eine Detailansicht der dritten Variante zur Anbringung des Betätigungsknopfs an der Spindel;
- Fig. 14:: eine vierte Variante zur Anbringung eines Betätigungsknopfs an einer Spindel;
- Fig. 15:: eine Detailansicht der vierten Variante zur Anbringung des Betätigungsknopfs an der Spindel;
- Fig. 16:: eine fünfte Variante zur Anbringung eines Betätigungsknopfs an einer Spindel;
- Fig. 17:: eine Detailansicht der fünften Variante zur Anbringung des Betätigungsknopfs an der Spindel;
- Fig. 18:: eine sechste Variante zur Anbringung eines Betätigungsknopfs an einer Spindel;
- Fig. 19:: ein erster Einsatz der sechsten Variante zur Anbringung des Betätigungsknopfs an der Spindel in einer ersten Darstellung;
- Fig. 20:: der erste Einsatz der sechsten Variante zur Anbringung des Betätigungsknopfs an der Spindel in einer zweiten Darstellung;
- Fig. 21:: eine siebte Variante zur Anbringung eines Betätigungsknopfs an einer Spindel;
- Fig. 22:: ein zweiter Einsatz der siebten Variante zur Anbringung des Betätigungsknopfs an der Spindel;
- Fig. 23:: eine achte Variante zur Anbringung eines Betätigungsknopfs an einer Spindel; und
- Fig. 24:: eine neunte Variante zur Anbringung eines Betätigungsknopfs an einer Spindel.

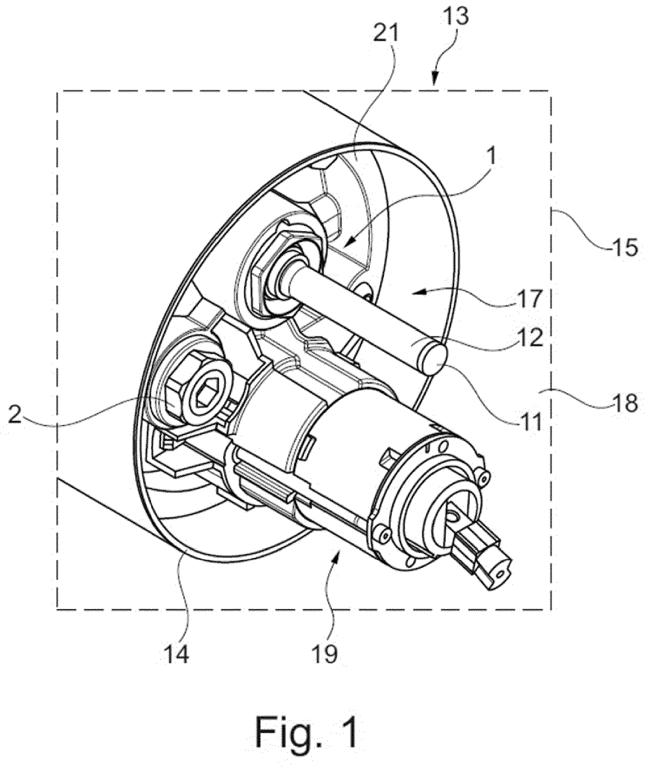

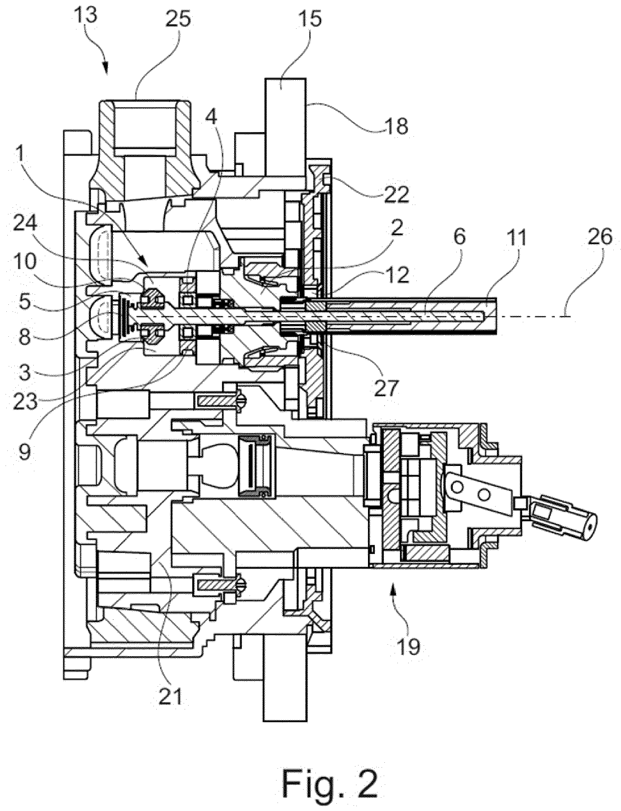

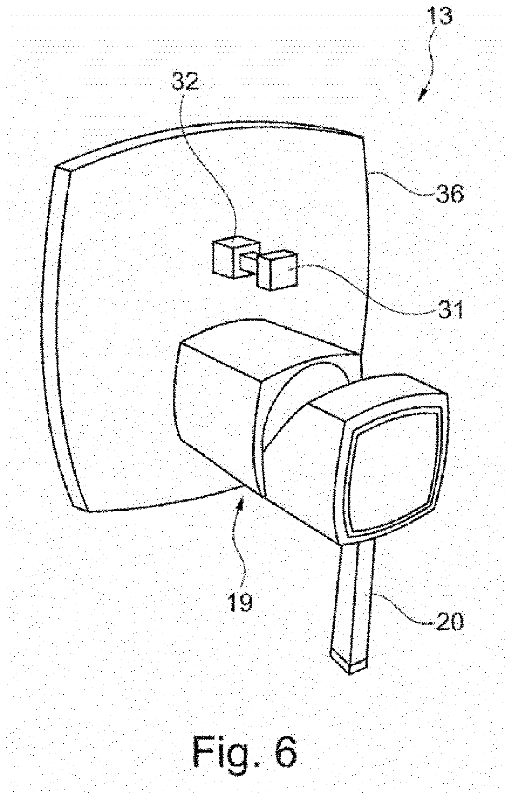

Die Fig. 1 zeigt eine erste Variante eines Unterputzeinbaukörpers 13 in einer perspektivischen Darstellung während der Montage in einer Wand 15. Der Unterputzeinbaukörper 13 wird zunächst in einen Montageraum 17 der Wand 15 eingesetzt und in diesem befestigt. Ein gegebenenfalls über eine Vorderseite 18 der Wand 15 hinausragender Abschnitt eines Gehäuses 14 des Unterputzeinbaukörpers 13 wird anschließend bündig zu der Vorderseite 18 der Wand 15 abgeschnitten. Der Unterputzeinbaukörper 13 ist im Wesentlichen zylinderförmig ausgebildet und weist einen als manuellen Mischer oder einen als Thermostatkartusche ausgebildeten Mischer 19 sowie ein Umstellventil 1 auf. Der Mischer 19 und das Umstellventil 1 sind an einer Funktionseinheit 21 des Unterputzeinbaukörpers 13 befestigt. Dem Mischer 19 ist über einen hier nicht gezeigten Kaltwasserzulauf des Unterputzeinbaukörpers 13 Kaltwasser und über einen hier nicht gezeigten Warmwasserzulauf des Unterputzeinbaukörpers 13 Warmwasser zuführbar. Hierzu sind in der Funktionseinheit 21 des Unterputzeinbaukörpers 13 von dem Kaltwasserzulauf zum Mischer 19 Kaltwasserleitungen und von dem Warmwasserzulauf zum Mischer 19 Warmwasserleitungen ausgebildet. Das Kaltwasser und das Warmwasser sind durch den Mischer 19 zu einem Mischwasser mit einer gewünschten Mischwassertemperatur mischbar. Zur Betätigung des Mischers 19 ist der Hebel über einen in der Fig. 6 gezeigten Hebel 20 durch einen Benutzer betätigbar. Von dem Mischer 19 führt zumindest eine Mischwasserleitung in der Funktionseinheit 21 zu dem Umstellventil 1. Das Mischwasser ist durch das Umstellventil 1 gezielt entweder einem ersten Umstellventilablauf 4 oder einem zweiten Umstellventilablauf 5 (vgl. Fig. 2) zuleitbar. Das Umstellventil 1 ist hier somit nach Art eines Zwei-WegeVentils ausgebildet. Weiterhin ist hier eine Führungshülse 12 und ein in ein längsseitiges Ende der Führungshülse 12 eingesteckter Anschlag 11 zu erkennen. Die Führungshülse 12 ist an einem Umstellventilgehäuse 2 des Umstellventils 1 befestigt, das hier nach Art eines Oberteils ausgebildet ist. Das Umstellventilgehäuse 2 ist wiederum in die Funktionseinheit 21 des Unterputzeinbaukörpers 13 geschraubt.

Die Fig. 2 zeigt den Unterputzeinbaukörper 13 nach der Anbringung einer Trägerplatte 22 in einer Schnittdarstellung. Die Trägerplatte 22 liegt bündig zu der Vorderseite 18 der Wand 15 auf der Wand 15 und ist an dem Unterputzeinbaukörper 13 und/oder der Wand 15 befestigt. Das Mischwasser fließt von dem Mischer 19 über einen hier nicht gezeigten Mischwasserkanal der Funktionseinheit 21 in einen Umstellventilzulauf 23, der hier nach Art einer Umstellventilzulaufkammer 24 ausgebildet ist, in das Umstellventil 1. In der Umstellventilzulaufkammer 24 ist ein Ventilkörper 3 angeordnet, der wahlweise an einem ersten Ventilsitz 9 oder zweitem Ventilsitz 10 anliegen kann. In der Fig. 2 liegt der Ventilkörper 3 an dem zweiten Ventilsitz 10 an, sodass ein erster Umstellventilablauf 4 des Umstellventils 1 geöffnet ist. Das Mischwasser kann dadurch aus der Umstellventilzulaufkammer 24 durch den ersten Umstellventilablauf 4 zu einem ersten Ablauf 25 des Unterputzeinbaukörpers 13 fliesen. An den ersten Ablauf 25 kann eine Flüssigkeitsleitung angeschlossen werden, die beispielsweise zu einer Handbrause einer Dusche führt. Liegt der Ventilkörper 3 an dem ersten Ventilsitz 10 an, ist ein zweiter Umstellventilablauf 5 des Umstellventils 1 geöffnet. Das Mischwasser kann dann aus der Umstellventilzulaufkammer 24 durch den zweiten Umstellventilablauf 5 zu einem hier nicht gezeigten zweiten Ablauf des Unterputzeinbaukörpers 13 fließen. Der Ventilkörper 3 ist an einer Spindel 6 befestigt, sodass der Ventilkörper 3 durch die Spindel 6 zwischen dem ersten Ventilsitz 9 und dem zweiten Ventilsitz 10 verstellbar ist. Hierzu ist die Spindel 6 entlang ihrer Längsachse 26, die hier deckungsgleich mit einer Längsachse des Umstellventils 1 ist, begrenzt verlagerbar in dem Umstellventilgehäuse 2 gelagert. Die Spindel 6 erstreckt sich durch eine Öffnung 27 der Trägerplatte 22 aus der Wand 15 heraus. Weiterhin ist die Spindel 6 von der bereits in der Fig. 1 gezeigten Führungshülse 12 umgeben. Die Führungshülse 12 verläuft koaxial zu der Spindel 6 und ist mit einem ersten längsseitigen Ende in das Umstellventilgehäuse 2 eingeschraubt. An einem dem ersten längsseitigen Ende der Führungshülse 12 gegenüberliegende zweiten längsseitigen Ende der Führungshülse 12 ist der bereits in der Fig. 1 gezeigte Anschlag 11 eingesteckt. Der Anschlag 11 ist hier nach Art eines Anschlagstopfens ausgebildet. Die Spindel 6 wird durch ein elastisches Element 8 nach Art einer Feder gegen den Anschlag 11 vorgespannt. Das elastische Element 8 ist an einem dem Anschlag 11 gegenüberliegendem längsseitigen Ende der Spindel 6 angeordnet und übt eine Kraft auf die Spindel 6 in Richtung des Anschlags 11 aus. Der Anschlag 11 ist derart an der Führungshülse 12 befestigt, dass sich der Anschlag 11 durch die Kraft des elastischen Elements 8 nicht selbstständig lösen kann. Das elastische Element 8 stützt sich hier an der Funktionseinheit 21 des Unterputzeinbaukörpers 13 ab.

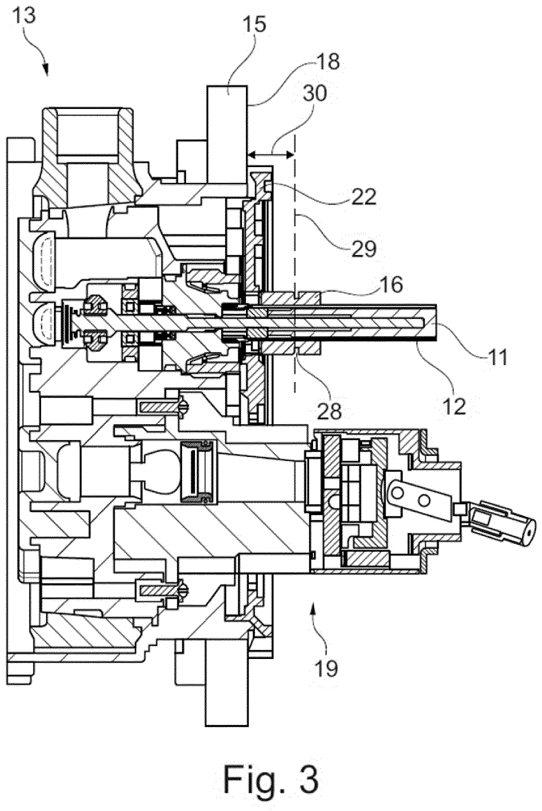

Die Fig. 3 zeigt den Unterputzeinbaukörper 13 nach Anbringung einer Ablängschablone 16, die hier nach Art einer Sägeschablone ausgebildet ist. Die Ablängschablone 16 ist hülsenförmig ausgebildet und auf die Führungshülse 12 bis zur bündigen Anlage an die Trägerplatte 22 aufgeschoben. Hierzu kann die Ablängschablone 16 einen Innendurchmesser aufweisen, der im Wesentlichen einem Außendurchmesser der Führungshülse 12 entspricht. Weiterhin kann die Ablängschablone 16 (lösbar) an der Trägerplatte 22 arretierbar sein, sodass die Ablängschablone 16 gegenüber der Trägerplatte 22 insbesondere nicht verdrehbar ist. Die Ablängschablone 16 weist an einer äußeren Umfangsfläche eine umlaufende Nut 28 auf. Die Nut 28 dient als Führung für eine Säge, mit der die Spindel 6 und die Führungshülse 12 entlang einer parallel zu der Vorderseite 18 der Wand 15 verlaufenden Schnittebene 29 ablängbar sind. Die Schnittebene 29 weist zur Vorderseite 18 der Wand 15 einen Abstand 30 auf, der durch die Ablängschablone 16 vorgegeben ist. Unabhängig von der Einbautiefe des Unterputzeinbaukörpers 13 in der Wand 15 kragen die Spindel 6 und die Führungshülse 12 durch das Ablängen entlang der durch die Ablängschablone 16 vorgegebenen Schnittebene 29 stets mit einer vorgegebenen Länge aus der Wand 15 hervor.

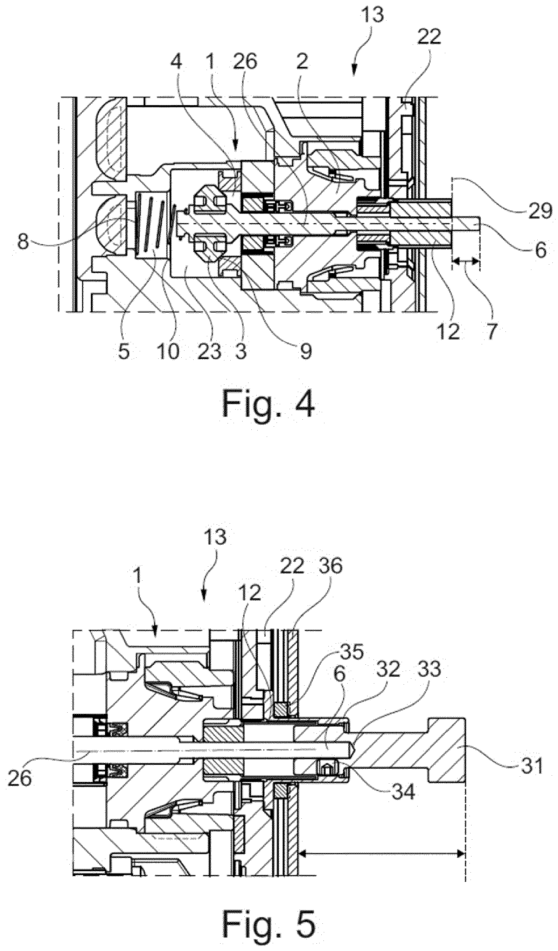

Die Fig. 4 zeigt eine Detailansicht des Unterputzeinbaukörpers 13 mit der Trägerplatte 22 im Bereich des Umstellventils 1 nach dem Ablängen der Spindel 6 und der Führungshülse 12 entlang der Schnittebene 29. Die Führungshülse 12 kragt nun mit einer Länge aus der in der Fig. 3 gezeigten Wand 15 vor, die dem in der Fig. 3 gezeigten Abstand 30 zwischen der Vorderseite 18 der Wand 15 und der Schnittebene 29 entspricht. Durch das Ablängen der Spindel 6 und der Führungshülse 12 wurde der in der Fig. 3 gezeigte Anschlag 11 entfernt bzw. abgeschnitten. Hierdurch wird eine Bewegung der Spindel 6 entlang ihrer Längsachse 26 freigegeben, sodass das elastische Element 8 die Spindel 6 um einen Stellweg 7 aus dem Umstellventilgehäuse 2 bzw. der Führungshülse 12 bewegt. Die Spindel 6 springt somit aus dem Umstellventilgehäuse 2 heraus. Hierbei wird der Ventilkörper 3 mit der Spindel 6 durch das elastische Element 8 von dem zweiten Ventilsitz 10 zu dem ersten Ventilsitz 9 bewegt. Der Stellweg 7 entspricht somit einem Spiel des Ventilkörpers 3 zwischen dem ersten Ventilsitz 9 und dem zweiten Ventilsitz 10 des Umstellventils 1. Der Ventilkörper 3 ist durch Eindrücken der Spindel 6 in das Umstellventilgehäuse 2 durch einen Benutzer zurückstellbar, bis dass der Ventilkörper 3 wieder an dem zweiten Ventilsitz 10 anliegt. In dieser (hier nicht gezeigten) Stellung schließt die Spindel 6 mit der Führungshülse 12 an der Schnittebene 19 bündig ab. Ist der in der Fig. 3 gezeigte Mischer 19 geöffnet, wird der Ventilkörper 3 in dieser Position durch den Flüssigkeitsdruck in dem Umstellventilzulauf 23 entgegen der Stellkraft des elastischen Elements 8 gehalten, sodass die Flüssigkeit über den ersten Umstellventilablauf 4 beispielsweise zu einer Handbrause einer Dusche abläuft. Wird der Mischer 19 geschlossen, sinkt der Flüssigkeitsdruck in dem Umstellventilzulauf 23, sodass der Ventilkörper 3 durch das elastische Element 8 auf den ersten Ventilsitz 9 gedrückt wird und die Flüssigkeit aus dem Umstellventilzulauf 23 über den zweiten Umstellventilablauf 5 beispielsweise zu einer Kopfbrause der Dusche ablaufen kann.

Die Fig. 5 zeigt eine weitere Detailansicht des Unterputzeinbaukörpers 13 mit der Trägerplatte 22 nach dem Anbringen eines Betätigungsknopfs 31 für das Umstellventil 1. Der Betätigungsknopf 31 wird hier in einer ersten Variante an der Spindel 6 befestigt. Nach dem in der Fig. 4 gezeigten Ablängen der Spindel 6 und der Führungshülse 12 wird zunächst der Betätigungsknopf 31 mit seiner Aufnahme 33 auf die Spindel 6 aufgesteckt und mit einer Schraube 34 an der Spindel 6 fixiert. Die Schraube 34 ist hier nach Art einer Madenschraube ausgebildet. Anschließend wird eine Dekorhülse 32 auf die Führungshülse 12 aufgesteckt, an der Trägerplatte 22 arretiert und mit einer Dichtung 35 abgedichtet. Die Dekorhülse 32 überdeckt die Schraube 34, sodass diese in jeder Stellung des Betätigungsknopfs 31 nicht sichtbar ist. Der Betätigungsknopf 31 weist innerhalb der Führungshülse 12 und der Dekorhülse 32 einen Außendurchmesser auf, der im Wesentlichen einem Innendurchmesser der Führungshülse 12 und der Dekorhülse 32 entspricht, sodass der Betätigungsknopf 31 bei seiner Bewegung entlang der Längsachse 26 durch die Führungshülse 12 und die Dekorhülse 32 geführt ist. Zuletzt wird der Unterputzeinbaukörper 13 mit einer Dekorblende 36 verdeckt.

Die Fig. 6 zeigt eine Außenansicht des Unterputzeinbaukörpers 13 nach seiner vollständigen Montage. Zu erkennen sind hier der in der Dekorhülse 32 geführte Betätigungsknopf 31 und der Hebel 20 zur Betätigung des Mischers 19. Der übrige Unterputzeinbaukörper 13 ist durch die Dekorblende 36 verdeckt.

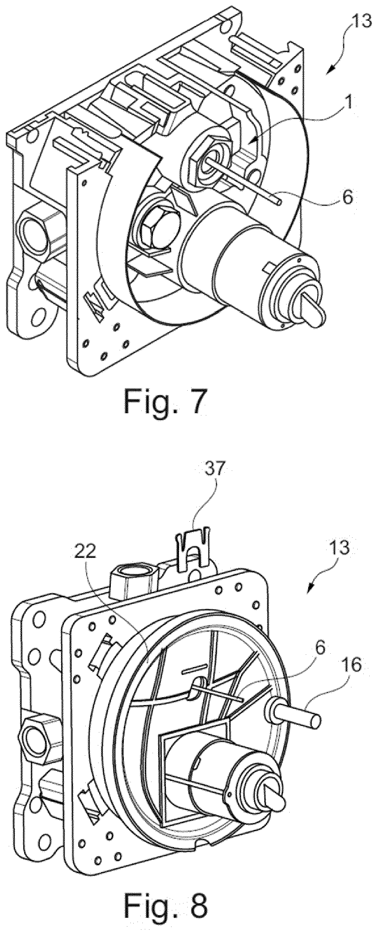

Die Fig. 7 zeigt eine zweite Variante des Unterputzeinbaukörpers 13 in einer perspektivischen Darstellung. Die zweite Variante des Unterputzeinbaukörpers 13 unterscheidet sich von der ersten Variante des Unterputzeinbaukörpers 13 lediglich durch ein abweichendes Umstellventil 1. Die Spindel 6 des Umstellventils 1 ist hier nicht durch eine Führungshülse 12 umgeben.

Die Fig. 8 zeigt die zweite Variante des Unterputzeinbaukörpers 13 nach der Anbringung der Trägerplatte 22. Zum Ablängen der Spindel 6 wird eine Ablängschablone 16 direkt auf die Spindel 6 gesteckt und mit einem Clip 37 an der Trägerplatte 22 gesichert. Danach wird die Spindel 6, beispielsweise über eine entsprechende Nut in der Ablängschablone 16, abgelenkt. Dabei kann die Spindel manuell in das hier nicht zu erkennende Umstellventilgehäuse 2 gedrückt werden, sodass die Spindel 6 nach dem Ablängen mit einem entsprechendem Stellweg aus dem Umstellventilgehäuse 2 verstellt wird.

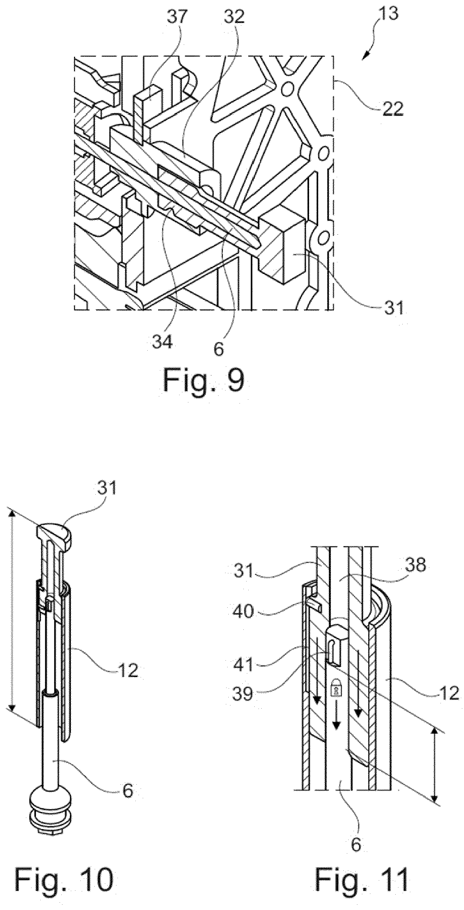

Die Fig. 9 zeigt die zweite Variante des Unterputzeinbaukörpers 13 nach dem Ablängen der Spindel 6. Zunächst wird eine Dekorhülse 32 mit dem Betätigungsknopf 31 auf die Spindel 6 aufgeschoben und der Betätigungsknopf 31 mit der Schraube 34 an der Spindel 6 befestigt. Anschließend wird die Dekorhülse 32 mit dem Clip 37 an der Trägerplatte 22 gesichert.

Die Fig. 10 zeigt eine zweite Variante zur Befestigung eines Betätigungsknopfs 31 an einer Spindel 6, die durch eine Führungshülse 12 zumindest teilweise umgeben ist. Die Fig. 11 zeigt eine Detailansicht der zweiten Variante zur Befestigung des Betätigungsknopfs 31 an der Spindel 6. Der Betätigungsknopf 31 weist ein Innengewinde 38 auf, mit dem der Betätigungsknopf 31 zum Ausgleich unterschiedlicher Einbautiefen eines Umstellventils mit einer gewünschten Länge auf die Spindel 6 aufschiebbar ist. Die Spindel 6 weist an einem längsseitigen Ende einen sich von dem längsseitigen Ende weg erstreckenden, seitlichen Widerhaken 39 auf, der beim Aufschieben des Betätigungsknopfs 31 auf die Spindel 6 mit dem Innengewinde 38 des Betätigungsknopfs 38 verrastet, sodass sich der Betätigungsknopf 31 nicht mehr von der Spindel 6 lösen kann. Weiterhin weist der Betätigungsknopf einen seitlichen Stift 40 auf, der als Drehsicherung des Betätigungsknopfs 31 in eine Längsnut 41 der Führungshülse eingreift.

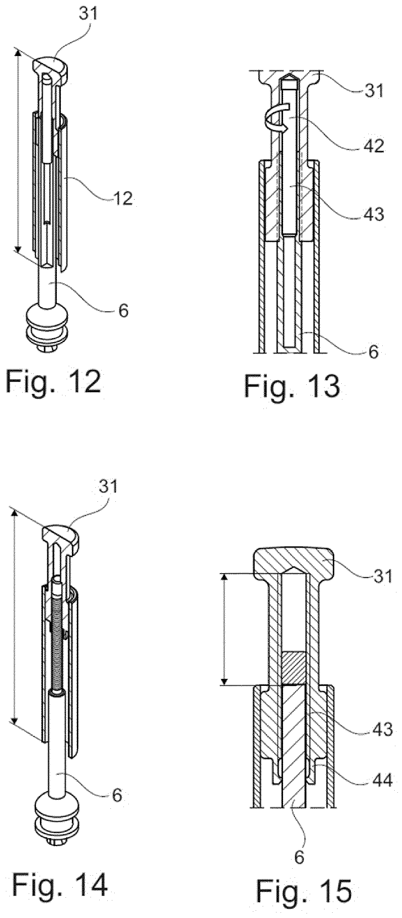

Die Fig. 12 zeigt eine dritte Variante zur Befestigung eines Betätigungsknopfs 31 an einer Spindel 6. Die Spindel 6 ist hier ebenfalls durch eine Führungshülse 12 umgeben. Die Fig. 13 zeigt eine Detailansicht der dritten Variante zur Befestigung des Betätigungsknopfs 31 an der Spindel 6. In ein längsseitiges Ende der Spindel 6 ist eine Stellschraube 42 zum Ausgleich unterschiedlicher Einbautiefen eines Umstellventils 1 einschraubbar und der Betätigungsknopf 31 anschließend auf die Stellschraube 42 aufsteckbar. Hierzu weist die Stellschraube 42 ein Außengewinde 43 auf.

Die Fig. 14 zeigt eine vierte Variante zur Befestigung eines Betätigungsknopfs 31 an einer Spindel 6. Die Fig. 15 zeigt eine Detailansicht der vierten Variante zur Befestigung des Betätigungsknopfs 31 an der Spindel 6. Der Betätigungsknopf 31 weist an einem längsseitigen Ende Rasthaken 44 auf, mit denen der Betätigungsknopf 31 zum Ausgleich von unterschiedlichen Einbautiefen des Umstellventils 1 in einer gewünschten Tiefe an einem Außengewinde 43 der Spindel 6 mit der Spindel 6 verrastbar ist.

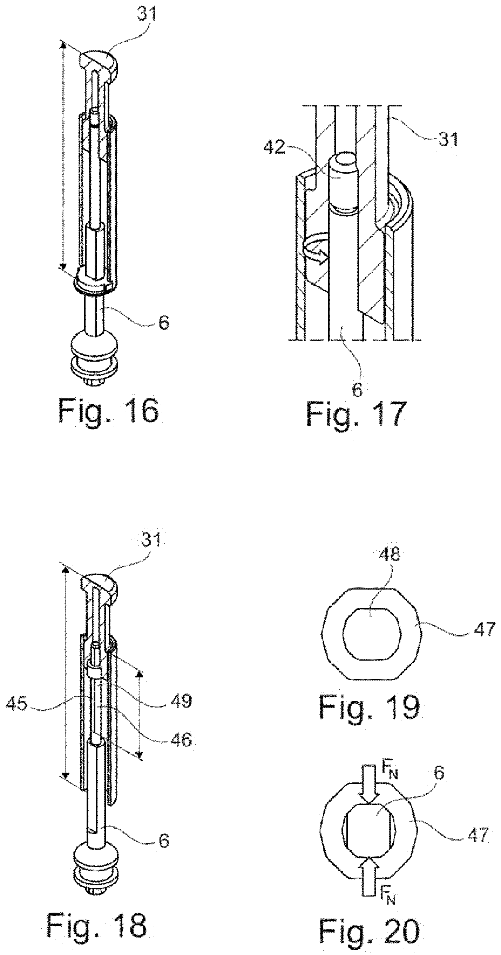

Die Fig. 16 zeigt eine fünfte Variante zur Befestigung eines Betätigungsknopfs 31 an einer Spindel 6. Die Fig. 17 zeigt eine Detailansicht der fünften Variante zur Befestigung des Betätigungsknopfs 31 an der Spindel 6. In ein längsseitiges Ende der Spindel 6 ist eine Stellschraube 42 zum Ausgleich unterschiedlicher Einbautiefen des Umstellventils 1 in einer gewünschten Höhe in die Spindel 6 einschraubbar. Anschließend wird der Betätigungsknopf 31 auf die Stellschraube 42 und die Spindel 6 gesteckt.

Die Fig. 18 zeigt eine sechste Variante zur Befestigung eines Betätigungsknopfs 31 an einer Spindel 6. Die Spindel 6 weist an einem längsseitigen Ende einen Querschnitt 46 auf, der nicht rund ist. Bei der hier gezeigten Variante weist die Spindel 6 in diesem Bereich zwei gegenüberliegende Abflachungen 45 auf. Die Fig. 19 zeigt eine Draufsicht auf einen ersten Einsatz 47. Der Einsatz 47 ist hülsenförmig ausgebildet und weist eine Innenkontur 48 auf, die (im Wesentlichen) einer in der Fig. 18 gezeigten Außenkontur 49 der Spindel 6 entspricht. Hierdurch ist der Einsatz 47 zum Ausgleich unterschiedlicher Einbautiefen des Ventilkörpers 1 auf das längsseitige Ende der Spindel 6 aufsteckbar. In einer gewünschten Höhe wird der Einsatz 47 zur Befestigung an der Spindel 6 um 90° gedreht, sodass der Einsatz 47, wie in der Fig. 20 gezeigt, elastisch verformt wird. Der Einsatz 47 ist dann kraftschlüssig an der Spindel 6 befestigt.

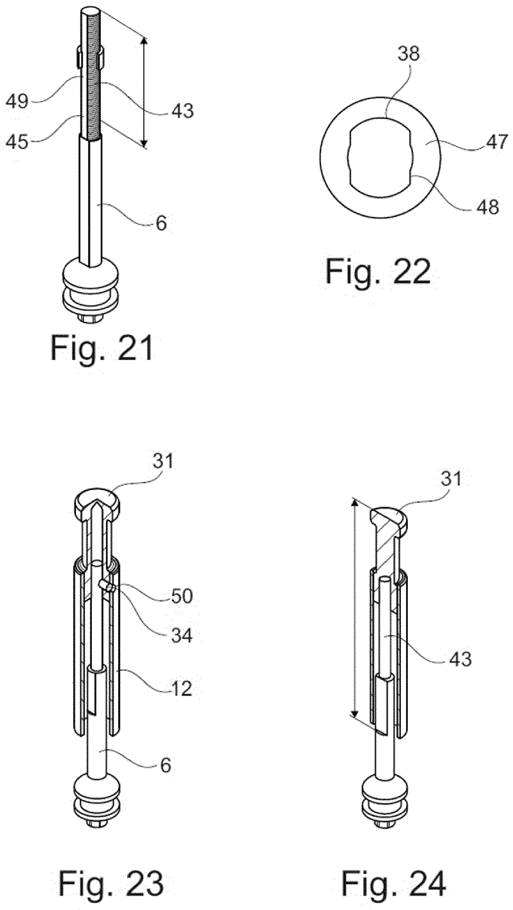

Die Fig. 21 zeigt eine siebte Variante zur Befestigung eines Betätigungsknopfs 31 an einer Spindel 6. Die Spindel 6 weist ein Außengewinde 43 auf. Im Bereich des Außengewindes 43 weist die Spindel 6 zwei gegenüberliegende Abflachungen 45 auf, an denen kein Außengewinde 43 ausgebildet ist. Die Fig. 22 zeigt eine Draufsicht auf einen zweiten Einsatz 47. Der Einsatz 47 ist ebenfalls hülsenförmig ausgebildet und weist eine Innenkontur 48 auf, die (im Wesentlichen) einer in der Fig. 21 gezeigten Außenkontur 49 der Spindel 6 entspricht. Zudem weist der Einsatz 47 ein Innengewinde 38 auf. Der Einsatz 47 ist auf das längsseitige Ende der Spindel 6 aufsteckbar und zum Ausgleich unterschiedlicher Einbautiefen des Umstellventils 1 an einer gewünschten Stelle um 90° drehbar, sodass das Innengewinde 38 des Einsatzes in das Außengewinde 43 der Spindel 6 eingreift.

Die Fig. 23 zeigt eine achte Variante zur Befestigung eines Betätigungsknopfs 31 an einer Spindel 6. Der Betätigungsknopf 31 ist auf ein längsseitiges Ende der Spindel 6 zum Ausgleich unterschiedlicher Einbautiefen des Umstellventils 1 in eine gewünschte Höhe einsteckbar und mit einer Schraube 34 an der Spindel 6 sicherbar. Hierzu kann in einer Führungshülse 12 eine Bohrung 50 für die Schraube 34 ausgebildet sein.

Die Fig. 24 zeigt eine neunte Variante zur Befestigung eines Betätigungsknopfs 31 an einer Spindel 6. Die Spindel 6 weist ein Außengewinde 43 auf, auf das der Betätigungsknopf 31 in eine gewünschte Höhe zum Ausgleich unterschiedlicher Einbautiefen eines Umstellventils 1 schraubbar ist.

Durch das vorgeschlagene Umstellventil und den Unterputzeinbaukörper ist ein einheitliches äußeres Erscheinungsbild einer Sanitärarmatur gewährleistbar.

### Bezugszeichenliste

- 1: Umstellventil
- 2: Umstellventilgehäuse
- 3: Ventilkörper
- 4: erster Umstellventilablauf
- 5: zweiter Umstellventilablauf
- 6: Spindel
- 7: Stellweg
- 8: elastisches Element
- 9: erster Ventilsitz
- 10: zweiter Ventilsitz
- 11: Anschlag
- 12: Führungshülse
- 13: Unterputzeinbaukörper
- 14: Gehäuse
- 15: Wand
- 16: Ablängschablone
- 17: Montageraum
- 18: Vorderseite
- 19: Mischer
- 20: Hebel
- 21: Funktionseinheit
- 22: Trägerplatte
- 23: Umstellventilzulauf
- 24: Umstellventilzulaufkammer
- 25: erster Ablauf
- 26: Längsachse
- 27: Öffnung
- 28: Nut
- 29: Schnittebene
- 30: Abstand
- 31: Betätigungsknopf
- 32: Dekorhülse
- 33: Aufnahme
- 34: Schraube
- 35: Dichtung
- 36: Dekorblende
- 37: Clip
- 38: Innengewinde
- 39: Widerhaken
- 40: Stift
- 41: Längsnut
- 42: Stellschraube
- 43: Außengewinde
- 44: Rasthaken
- 45: Abflachungen
- 46: Querschnitt
- 47: Einsatz
- 48: Innenkontur
- 49: Außenkontur
- 50: Bohrung

## Patentansprüche

1. Verfahren zur Montage eines Unterputzeinbaukörpers (13) für eine Sanitärarmatur, wobei der Unterputzeinbaukörper (13) zumindest ein Gehäuse (14) und ein Umstellventil (1) für eine Sanitärarmatur aufweist,
wobei das Umstellventil (1) zumindest teilweise in dem Gehäuse (14) angeordnet ist, wobei das Umstellventil (1) zumindest ein Umstellventilgehäuse (2), einen Ventilkörper (3) zur gezielten Zuleitung einer Flüssigkeit zu wenigstens zwei Umstellventilabläufen (4, 5), nämlich einen ersten Umlenkventilablauf (4) und einen zweiten Umlenkventilablauf (5), und eine Spindel (6) zur Betätigung des Ventilkörpers (3) aufweist, wobei die Spindel (6) sich zumindest teilweise durch das Umstellventilgehäuse (2) erstreckt und im Betrieb des Umstellventils (1) in dem Umstellventilgehäuse (2) durch Zug und/oder Druck zum Verstellen des Ventilkörpers (3) zwischen einem ersten Ventilsitz (9) des ersten Umlenkventilablaufs (4) und einem zweiten Ventilsitz (10) des zweiten Umlenkventilablaufs (5) begrenzt verlagerbar ist, aufweisend zumindest den Schritt:
a) Befestigen des Unterputzeinbaukörpers (13) zumindest teilweise in einer Wand (15) oder einem Träger; und
**gekennzeichnet durch** den Schritt:
b) Ablängen der Spindel (6) des Umstellventils (1) des Unterputzeinbaukörpers (13),
wobei die Spindel (6) durch ein elastisches Element (8) vorgespannt ist, sodass die Spindel (6) nach dem Ablängen der Spindel (6) um einen definierten Stellweg (7) aus dem Umstellventilgehäuse verstellt wird.

2. Verfahren nach Patentanspruch 1, wobei zum Ablängen der Spindel (6) eine Ablängschablone (16) auf die Spindel (6) aufgesteckt wird.

3. Verfahren nach einem der vorstehenden Patentansprüche, wobei der Ventilkörper (3) durch das elastische Element (8) gegen den ersten Ventilsitz (9) verstellbar ist.

4. Verfahren nach einem der vorstehenden Patentansprüche, wobei der Ventilkörper (3) entgegen einer Stellkraft des elastischen Elements (8) gegen den zweiten Ventilsitz (10) verstellbar ist.

5. Verfahren nach einem der vorstehenden Patentansprüche, wobei die Spindel (6) vor dem Ablängen gegen einen Anschlag (11) vorgespannt ist.

6. Verfahren nach Patentanspruch 5, wobei der Anschlag (11) an dem Umstellventilgehäuse (2) oder einer Führungshülse (12) der Spindel (6) befestigt ist.

7. Verfahren nach einem der Patentansprüche 5 oder 6, wobei der Anschlag (11) durch das Ablängen der Spindel (6) entfernbar ist.

8. Verfahren nach einem der vorhergehenden Patentansprüche, wobei das elastische Element (8) die Spindel (6) an einem längsseitigen Ende der Spindel (6) kontaktiert.

## Claims

1. A method for mounting a flush-mounted installation body (13) for a sanitary fitting, wherein the flush-mounted installation body (13) has at least one housing (14) and a diverter valve (1) for a sanitary fitting, wherein the diverter valve (1) is arranged at least partially in the housing (14), wherein the diverter valve (1) has at least one diverter valve housing (2), a valve body (3) for the targeted supply of a liquid to at least two diverter valve outlets (4, 5), namely a first diverter valve outlet (4) and a second diverter valve outlet (5), and a spindle (6) for actuating the valve body (3), wherein the spindle (6) extends at least partially through the diverter valve housing (2) and, during operation of the diverter valve (1) in the diverter valve housing (2), can be displaced to a limited extent by tension and/or pressure for moving the valve body (3) between a first valve seat (9) of the first diverter valve outlet (4) and a second valve seat (10) of the second diverter valve outlet (5), comprising at least the step of:
a) fixing the flush-mounted installation body (13) at least partially in a wall (15) or on a support; and
**characterized by** the step of:
(b) cutting to length the spindle (6) of the diverter valve (1) of the flush-mounted installation body (13),
wherein the spindle (6) is biased by an elastic element (8) so that after cutting the spindle (6) to length, the spindle (6) is displaced from the diverter valve body by a defined adjustment travel (7).

2. The method according to claim 1, wherein for cutting the spindle (6) to length, a cutting template (16) is mounted on the spindle (6).

3. The method according to any one of the preceding claims, wherein the valve body (3) can be displaced against the first valve seat (9) by the elastic element (8).

4. The method according to any one of the preceding claims, wherein the valve body (3) can be displaced counter an actuating force of the elastic element (8) against the second valve seat (10).

5. The method according to any one of the preceding claims, wherein the spindle (6) is biased against a stop (11) prior to being cut to length.

6. The method according to claim 5, wherein the stop (11) is fixed to the diverter valve housing (2) or a guide sleeve (12) of the spindle (6).

7. The method according to any one of claims 5 or 6, wherein the stop (11) is removable by cutting the spindle (6) to length.

8. The method according to any one of the preceding claims, wherein the elastic element (8) contacts the spindle (6) at a longitudinal end of the spindle (6).

## Revendications

1. Procédé, destiné au montage d'un élément à encastrer (13) pour une robinetterie sanitaire, l'élément à encastrer (13) comportant au moins un boîtier (14) et un robinet d'arrêt (1) pour une robinetterie sanitaire,
le robinet d'arrêt (1) étant placé au moins en partie dans le boîtier (14), le robinet d'arrêt (1) comportant au moins un boîtier (2) de robinet d'arrêt, un corps (3) de robinet pour l'alimentation ciblée d'un liquide vers au mois deux écoulements (4, 5) de robinet d'arrêt, à savoir un premier écoulement (4) de robinet de dérivation et un deuxième écoulement (5) de robinet de dérivation, et une broche (6), pour l'actionnement du corps (3) de robinet,
la broche (6) s'étendant au moins partiellement à travers le boîtier (2) de robinet d'arrêt et en cours de fonctionnement du robinet d'arrêt (1) étant déplaçable de manière limitée dans le boîtier (2) de robinet d'arrêt par traction et/ou par pression, pour régler le corps (3) du robinet entre un premier siège de robinet (9) du premier écoulement (4) de robinet de dérivation et un deuxième siège de robinet (10) du deuxième écoulement (5) de robinet de dérivation comprenant au moins l'étape consistant à :
a) fixer l'élément à encastrer (13) au moins partiellement dans une paroi (15) ou dans un support, et **caractérisé par** l'étape consistant à
b) couper à longueur la broche (6) du robinet d'arrêt (1) de l'élément à encastrer (13),
la broche (6) étant précontrainte par un élément (8) élastique, de telle sorte, qu'après la coupe à longueur de la broche (6), la broche (6) soit déplacée d'une course de commande (7) définie hors du boîtier de robinet d'arrêt.

2. Procédé selon la revendication 1 du brevet, pour la coupe à longueur de la broche (6) un gabarit de coupe (16) étant emboîté sur la broche (6).

3. Procédé selon l'une quelconque des revendications précédentes du brevet, le corps (3) de robinet étant réglable par l'élément (8) élastique contre le premier siège de robinet (9).

4. Procédé selon l'une quelconque des revendications précédentes du brevet, le corps (3) de robinet étant réglable à l'encontre d'une force de réglage de l'élément (8) élastique contre le deuxième siège de robinet (10).

5. Procédé selon l'une quelconque des revendications précédentes du brevet, avant la coupe à longueur, la broche (6) étant précontrainte contre une butée (11).

6. Procédé selon la revendication 5 du brevet, la butée (11) étant fixée sur le boîtier (2) de robinet d'arrêt ou sur une douille de guidage (12) de la broche (6).

7. Procédé selon l'une quelconque des revendications 5 ou 6 du brevet, la butée (11) pouvant se retirer après la coupe à longueur de la broche (6).

8. Procédé selon l'une quelconque des revendications précédentes du brevet, l'élément (8) élastique entrant en contact avec la broche (6) sur une extrémité longitudinale de la broche (6).
